Europäisches Patentamt

(19) European Patent Office

Office européen des brevets

(11) Publication number: **0 184 394**
**B1**

## (12) EUROPEAN PATENT SPECIFICATION

(45) Date of publication of patent specification: **24.05.89**

(21) Application number: **85308693.2**

(22) Date of filing: **29.11.85**

(51) Int. Cl.⁴: **C 03 B 9/16, C 03 B 9/36**

(54) **Glassware forming machines of the individual section type with improved section frames.**

(30) Priority: **04.12.84 GB 8430530**

(43) Date of publication of application:
**11.06.86 Bulletin 86/24**

(45) Publication of the grant of the patent:
**24.05.89 Bulletin 89/21**

(84) Designated Contracting States:
**DE FR IT**

(56) References cited:
**FR-A-2 362 084**
**US-A-4 162 910**
**US-A-4 362 544**

(73) Proprietor: **EMHART INDUSTRIES, INC.**
**426 Colt Highway**
**Farmington Connecticut 06032 (US)**

(72) Inventor: **Nebelung, Hermann Heinrich**
**Baslerstrasse 29**
**CH-8048 Zurich (CH)**

(74) Representative: **Randall, John Walter et al**
**Emhart Patents Department Lyn House 39 The**
**Parade**
**Oadby, Leicester LE2 5BB (GB)**

Courier Press, Leamington Spa, England.

**Description**

This invention is concerned with glassware forming machines of the individual section type having improved section frames.

Glassware forming machines of the individual section type are well known and comprise a plurality of individual sections, each of which is capable of forming a gob of molten glass into an article of glassware, the sections being arranged side-by-side to receive gobs from a common source in a predetermined sequence and to deliver their output to a common conveyor. A conventional machine of this type has a machine base, and a plurality of individual sections mounted side-by-side on the machine base.

Each section of a conventional machine of the individual section type comprises a supporting frame and forming mechanisms supported by the frame which are arranged to operate in a predetermined sequence to form a gob of molten glass supplied to the section into an article of glassware. The forming mechanisms of one section will now be described on the assumption that the section is operating to form one article of glassware at a time. It is, however, common practice to duplicate (or even triple or quadruple) the moulds in a section and modify the forming mechanisms as appropriate so that two or more articles are formed simultaneously from two or more gobs delivered simultaneously to the section. The forming mechanisms of a section typically include a blank mould opening mechanism arranged to open and close a blank mould in which gobs are formed into parisons, a plunger mechanism operable to move a plunger into or out of the blank mould either to press the glass in the mould or to supply air for blowing the glass, a funnel mechanism for moving a funnel into or out of a gob-guiding position in which the funnel acts to guide gobs into the blank mould, a baffle mechanism for moving a baffle into or out of an operative position in which the top of the blank mould is closed by the baffle, a parison transfer mechanism for transferring parisons from the blank mould to a finish mould (sometimes called a blow mould), and a finish mould mechanism for opening and closing the finish mould. A section also comprises a blow head mechanism for moving a blow head into or out of a position in which it can blow air into a parison in the finish mould to cause the parison to expand to the shape of the cavity of the finish mould and thereby form a completed article of glassware, and a take-out mechanism for taking completed articles of glassware out of the finish mould. The blow head mechanism and the take-out mechanism may, however, be supported independently of the section frame.

The section frame of a section of a conventional machine is generally made of cast iron and comprises a bottom plate mounted on the machine base and a box-like casting comprising side and end walls which extend upwardly from the bottom plate and are supported thereby and a top plate integral with the side and end walls. The top plate supports some of the forming mechanisms which are mounted either on its top surface or are fitted into holes through the top plate and other forming mechanisms are mounted on the bottom plate within the box-like casting.

The forming mechanisms of a conventional machine are operated by supplying fluid under pressure thereto. In most cases, the fluid under pressure is air but recently hydraulic operation has been introduced bringing with it advantages in the control of the movement of the mechanisms. In order to connect the operating mechanisms to a source of fluid under pressure, the space within the section frame contains pipes connecting the mechanisms to valves mounted on the external surface of one of the end walls of the machine. The valves are operated by a timing mechanism of the machine so that the various forming mechanisms are operated at the required times in a machine cycle.

In a conventional machine as described above, the section frame contains a considerable quantity of pipe work which is complicated to install in the confined space available. Furthermore, if it is desired to convert a pneumatically-operating machine to hydraulic operation, all the pneumatic pipe work must be removed and replaced by hydraulic pipe work as there is not room in the section frame for pneumatic pipe work and hydraulic pipe work. The same problem arises in converting from hydraulic operation to pneumatic operation.

It is an object of the present invention to provide a glassware forming machine of the individual section type in which complicated pipe work is not required when only hydraulic or pneumatic operation is contemplated and which can be more readily converted from hydraulic to pneumatic operation or vice versa.

The invention provides a glassware forming machine of the individual section type comprising a machine base, and a plurality of individual sections mounted side-by-side on the machine base, each section comprising a supporting frame and forming mechanisms supported by the frame, the forming mechanisms being arranged to operate in a predetermined sequence to form a gob of molten glass supplied to the section into an article of glassware, the forming mechanisms being operated by the supply thereto of fluid under pressure, the supporting frame of each section comprising a bottom plate mounted on the machine base, side and end plates extending upwardly from the bottom plate and supported thereby, and a top plate supported by the side and end plates, characterised in that each section frame has passages formed therein through which fluid under pressure can be supplied to the forming mechanisms, the passages being formed within the material of at least one of the plates of the supporting frame.

In a machine as described in the last preceding paragraph, the forming mechanisms can be supplied with fluid under pressure through the passages in the plates forming the section frame. This avoids the installation of complicated pipe work in the space within the section frame where only hydraulic or pneumatic operation is contemplated. The passages can be used to supply either air or hydraulic fluid as required. Where it is required to provide for easy conversion from hydraulic to pneumatic operation or vice versa, pipe work suitable for one of the fluids can be installed in the space within the section frame. One of the fluids can be supplied to the passages while the pipe work is disconnected from the supply or the passages can be disconnected from the supply while fluid is supplied to the pipe work. The pipe work can, therefore, remain in situ while the passages are in use and is readily available when it is required to convert to the fluid for which the pipe work is designed.

In a machine in accordance with the last preceding paragraph but one, the section frames may suitably be made of steel and the passages suitably formed by bores within the plates of the frames. Steel is more suitable as a material for this purpose than cast iron because cast iron would be more prone to leakage from the passages caused by the porosity of the material or other defects. The frame may suitably be constructed by welding steel plates together. Alternatively, a plate containing passages, particularly the bottom plate, may comprise two plate portions, one of which directly overlies the other, and the passages formed within the plate may be provided by grooves formed in one or both of the surfaces of the plate portions which engage one another.

Each passage may have a portion which extends in the bottom plate longitudinally of the section. Thus connections to a source of fluid under pressure can be made at an end of the section where access is not restricted by adjacent sections. These portions can extend along the bottom plate to beneath the forming mechanism which it supplies. Those passages which supply forming mechanisms which are mounted on the bottom plate can each have an upwardly-opening exit formed in the bottom plate for connection to the forming mechanism, the exit communicating with the portion of the passage which extends in the bottom plate. Those passages which supply forming mechanisms which are mounted on the top plate can each have a portion which extends upwardly in one of the side or end plates to reach the level of the forming mechanism. Where the portion extends upwardly in a side plate, it can communicate with a portion extending longitudinally in the bottom plate through a portion extending transversely in the bottom plate. A portion of the passage may extend transversely in the top plate to reach the forming mechanism.

The top plate of each section frame may be removably mounted on the side and end plates thereof. This has the advantage that forming mechanisms mounted on the top plate can be removed en bloc by a simple and rapid disconnection procedure instead of, as at present, having to remove each mechanism separately. This is particularly advantageous when converting between hydraulic and pneumatic operation since all the hydraulic mechanisms can be mounted on one top plate which is interchangeable with the top plate on which all the pneumatic mechanisms are mounted. Where the passages are designed for the conveyance of hydraulic fluid, when it is required to operate in a pneumatic manner, the top plate may be arranged to cover the upper ends of the passages to prevent dirt from entering the passages.

Where a removable top plate is used it may be divided into three separately removable portions, each having one or more of the forming mechanisms mounted thereon. This has the advantage that the mechanism or mechanisms mounted on a particular portion can be removed separately. Indeed with this arrangement it is possible to utilise the passages to supply fluid to some of the mechanisms and pipe work to supply fluid to the remaining mechanisms so that a partially hydraulic and partially pneumatic machine can be achieved.

In order to simplify the required connections, at least one of the passages may communicate with passages in a distribution block mounted on the bottom plate, the distribution block defining passages which lead to one or more valves which control the operation of one or more of the forming mechanisms; advantageously the parison transfer mechanism can be controlled in this way.

In a conventional machine, the pipes which supply fluid under pressure are also used to exhaust fluid. Thus, a typical forming mechanism has two pipes connected thereto, a first of the pipes being connected to a supply of fluid under pressure while the other pipe is connected to exhaust to cause movement of the forming mechanism in one direction and the connections being reversed, by the operation of valves, to cause movement in the opposite direction. A machine according to the invention can also be operated in this manner, as is the case with the first illustrative machine described below, alternatively each forming mechanism can have a supply passage and an exhaust passage associated therewith and the movements be controlled by valves mounted adjacent the forming mechanism, this is the case with the second illustrative machine described below. In this case, each section frame can have further passages formed therein through which fluid can be exhausted from the forming mechanisms, the further passages being formed within the material of at least one of the plates of the supporting frame. To further simplify the construction, a plurality of the further passages may communicate with a common exhaust passage formed in the bottom plate.

There now follow detailed descriptions, to be read with reference to the accompanying drawings, of two glassware forming machines which are illustrative of the invention. It is to be understood that the illustrative glassware forming machines have been selected for description by way of example and not of limitation of the invention.

In the drawings:

Figure 1 is a side elevational view of a section frame of the first illustrative glassware forming machine;

Figure 2 is a plan view of the section frame shown in Figure 1;

Figure 3 is a cross-sectional view, on a larger scale than Figures 1 and 2, showing the junction of a side plate and a top plate of the section frame shown in Figures 1 and 2;

Figure 4 is a side-elevational view, partially in section, of a part of the first illustrative glassware forming machine;

Figure 5 is a plan view of a bottom plate of a section frame of the second illustrative machine;

Figure 6 is a side elevational view, on a larger scale than Figure 5, of a distribution block and valves of the second illustrative machine;

Figure 7 is a plan view of the distribution block and valves shown in Figure 6; and

Figure 8 is a plan view of the distribution block shown in Figures 6 and 7 but with the valves removed and on a larger scale.

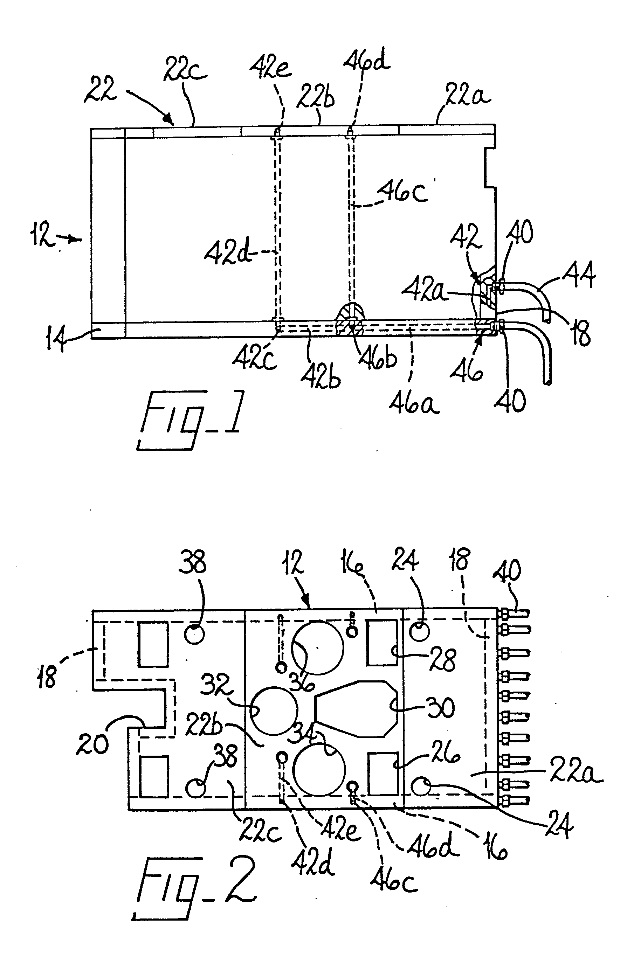

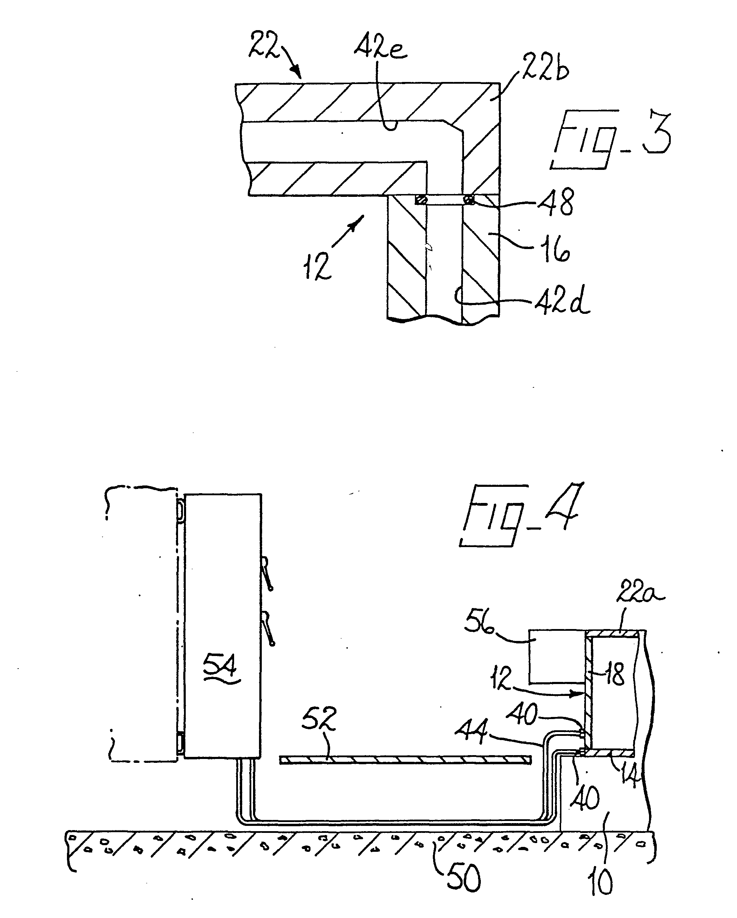

The first illustrative glassware forming machine is of the individual section type and comprises a machine base 10 (see Figure 4) and a plurality of individual sections mounted side-by-side on the machine base.

Each section of the first illustrative glassware forming machine comprises a supporting frame 12 and forming mechanisms (not shown) of conventional type supported by the frame 12 which are arranged to operate in a predetermined sequence to form a gob of molten glass supplied to the section into an article of glassware. The mechanisms are arranged to be operated by the supply thereto of fluid under pressure. The timing of the supply of fluid under pressure to the forming mechanisms is controlled by a timing system for the machine which synchronises the operating of the mechanisms of the section with the arrival of the gob at the section and also causes the various sections to operate in timed relationship to one another so that each gob delivered to the machine is manufactured into an article of glassware.

The supporting frame 12 of each section comprises a bottom plate 14 mounted on the machine base 10, side plates 16 and end plates 18 which extend upwardly from the bottom plate 14 and are supported thereby. The side and end plates 16 and 18 join one another at corners of the section so that the plates 16 and 18 surround a space above the bottom plate 14. The side plates 16 are generally planar as is one of the end plates 18. However, the other end plate 18 has a vertically extending recess 20 therein which, as is well known to those skilled in the art, provides space for the mounting of mould bottom plates of the section. The frame 12 also comprises a top plate 22 removably mounted on the side and end plates 16 and 18. The top plate 22 extends horizontally and has some of the forming mechanisms of the section (not shown) mounted thereon. Other forming mechanisms are mounted on the bottom plate 14. The top plate 22 is divided into three separately removable rectangular sections 22a, 22b and 22c. Each of these sections is bolted to the side plates 16 and the plates 22a and 22c are also bolted to the end plates 18. The plates 22a, 22b and 22c abut one another to form a continuous supporting surface. Holes are formed through the plates 22a, 22b and 22c so that forming mechanisms can be mounted therein. The plate 22a contains two circular holes 24 through which operating rods for a mould opening and closing mechanism of a blank mould of the section extend. The blank mould portions are supported above the plate 22a and the mechanism for opening and closing the blank mould is mounted on the bottom plate 14 beneath the plate 22a and is connected to the blank mould by the aforementioned operating rods. The plate 22b contains holes 26, 28, 30, 32, 34 and 36. The hole 26 and the hole 28 have cooling stacks mounted thereon which enable jets of cooling air to be applied to the blank mould of the section. The hole 30 has the plunger mechanism of the section mounted therein. The hole 32 has the invert mechanism of the section mounted therein. The holes 34 and 36 have the baffle mechanism and funnel mechanism of the section mounted therein. The plate 22c has two holes 38 formed therein for operating rods of the finish mould mechanism which operates in a similar manner to the blank mould mechanism aforementioned.

Each section frame 12 of the first illustrative glassware forming machine has passages formed therein through which fluid under pressure can be supplied to the forming mechanisms. The passages are formed within the material of at least one of the plates of the supporting frame 12 by bores. Each passage extends from a connector 40 mounted at an end of the supporting frame 12 to adjacent the forming mechanism which it is intended to supply with fluid. Thus, when the connector 40 is connected to a source of fluid under pressure, fluid is conveyed through the passage to the forming mechanism. The connectors 40 are arranged in two horizontal rows one above the other. The upper row of connectors 40 is mounted on the planar end plate 18 while the lower row of connectors 40 is mounted on the end of the bottom plate 14.

The passages in the frame 12 are formed by bores within the plates 14, 16, 18 and 22. There are 21 such passages but, in the interests of clarity, only two of the passages are illustrated in Figures 1 and 2. One of these passages 42 extends from a connector 40 in the upper row of connectors. This passage 42 comprises a downwardly extending bore 42a in the end plate 18, a horizontal bore 42b in the bottom plate 14 which communicates with the bore 42a and extends longitudinally of the section, a horizontal bore 42c in the bottom plate 14 which connects the bore 42b to the portion of the bottom plate 14 beneath one of the side plates 16, a vertical bore 42d extending upwardly in the side plate 16, and a horizontal bore 42e in the top plate 22b. The bore 42e extends to adjacent the hole 34 in which the baffle mechanism is mounted so that fluid passing through the passage 42 can be used to operate the baffle mechanism. Thus, fluid entering the connector 40 to which the passage 42 is connected, through a flexible pipe 44 first travels downwardly in the bore 42a, then travels longitudinally of the section in the bore 42b, then travels transversely of the section in the bore 42c, then travels upwardly in the bore 42d, and finally travels transversely of the section in the bore 42e to the baffle mechanism in the hole 34. A passage 46 which communicates with one of the connectors 40 in the lower row of connectors comprises a portion 46a extending horizontally in the bottom plate 14, a portion 46b extending horizontally in the bottom plate 14 normally to the portion 46a, a portion 46c extending vertically in the side plate 16 and a portion 46d extending horizontally in the top plate 22b. Thus, both the passages 42 and 46 comprise a portion extending longitudinally of the section within the bottom plate (the portions 42b and 46a), and a portion extending upwardly within one of the side plates 16 (the portions 42d and 46c). Each passage which communicates with one of the connectors has a portion which extends in the bottom plate 14, longitudinally of the section, to beneath the forming mechanism with which it is associated. Those passages which supply fluid to forming mechanisms which are mounted on the bottom plate (in this case, the blank mould opening mechanism, the blow mould opening mechanism, and the plunger mechanism) have an upwardly-opening exit (not shown) formed in the bottom plate for connection to the forming mechanism, the exit communicating with the portion of the passage which extends in the bottom plate. Those passages (e.g. 42 and 46) which supply fluid under pressure to forming mechanisms which are mounted on the top plate 22 (in this case, the funnel mechanism, the baffle mechanism, the parison transfer mechanism, and the blowhead mechanism) each have a portion which extends upwardly in one of the side plates 16 and some have a portion which extends in the top plate 22 transversely of the section.

The section frame 12 is preferably made of steel so that the passages can be formed by bores within the plates 14, 16, 18 and 22 without risk of substantial leakage. The plates 16 and 18 are preferably welded together to form an integral structure.

Figure 3 shows the junction of the portions 42d and 42e of the passage 42. It shows that where the portion 42d passes from the plate 16 into the plate 22b an annular seal 48 is provided in a recess in the top of the plate 16 to prevent leakage from the passage 42.

Figure 4 shows the base 10 of the first illustrative machine resting on the floor 50 of a factory with a frame 12 positioned thereon. The pipes 44 connected to the connectors 40 pass beneath a platform 52 on which an operator of the machine can stand and lead to a valve box 54 in which valves for controlling the flow of fluid to and from the forming mechanisms are housed. The box 54 can also contain servo mechanisms operable to control the rate of flow of the fluid. Figure 4 also shows a valve block 56 of conventional design mounted on the end plate 18 for use with pipe work contained within the section frame 12. In the first illustrative glassware forming machine, the passages 42 and 46 are arranged to convey hydraulic fluid to the operating mechanisms. Thus, when it is desired to operate the machine hydraulically the connectors 40 are connected to the pipes 44 and the machine can then operate. If, however, it is desired to operate the machine pneumatically, pipe work of conventional design is mounted in the space enclosed by the plates 16 and 18 to connect the valve block 56 to the forming mechanisms. The valve block 56 is then, in conventional manner, connected to a source of air under pressure (or two or more sources at different pressures) so that the valves in the valve block 56 can control the timing of the operation of the forming mechanisms pneumatically. Of course, in changing from pneumatic to hydraulic operation or vice versa, it is necessary to change the forming mechanisms mounted on the top plate 22. In the first illustrative glassware forming machine, this change is facilitated by the possibility of removing the top plate 22 and removing therewith the forming mechanisms en bloc. The top plate 22 can then be replaced by a top plate having the same dimensions but carrying operating mechanisms for pneumatic operation. The top plate 22 for pneumatic operation, however, does not have bores 42e and 46d therein but instead closes the top of the bores 42d and 46c to prevent entry of dirt into said bores. It is also possible to remove only a portion of the top plate 22, for example the portion 22b. This enables faulty mechanisms to be rapidly replaced without disturbing other mechanisms mounted on other portions of the top plate 22. Furthermore, the possibility exists of using pipe work in the section frame 12 to operate portions of the machine pneumatically while other portions operate hydraulically using fluid supplied through the passages 42 and 46.

The second illustrative machine is also of the individual section type and is generally similar in construction to the first illustrative machine. Hence, the second illustrative machine comprises a machine base (not shown) but similar to the base 10 and a plurality of individual sections mounted side-by-side on the machine base. The sections each comprise a supporting frame generally similar to the frame 12 comprising a bottom plate 114, side plates (not shown) and end plates (not shown). The frame supports forming mechanisms (not shown) which operate in conventional manner in a predetermined sequence to form a gob of molten glass supplied to the section into an article of glassware. The mechanisms are arranged to be operated by the supply thereto of fluid under pressure.

The differences between the first and the second illustrative machines lie in the supply of fluid under pressure to the forming mechanisms. In the first illustrative machine, the passages serve both as supply and exhaust passages depending on the positions of the valves in the box 54. However, in the second illustrative machine, each passage (to be described) serves only as a supply passage or as an exhaust passage and valves mounted adjacent to the forming mechanism control the movement of the forming mechanisms.

The supporting frame of each section of the second illustrative glassware forming machine has passages formed therein through which hydraulic fluid under pressure can be supplied to the forming mechanisms. The passages are formed by bores in the material of at least one of the plates of the supporting frame. The bores are closed, where appropriate, by plugs at the edges of the plate. Each passage extends from a connector (not shown but similar to the connectors 40) mounted at an end of the supporting frame to adjacent the operating mechanism which it supplies.

A first 120 of the passages is arranged to supply fluid to a baffle operating mechanism. This passage leads from a connector (not shown) mounted in a bore 122 which extends horizontally from an end face 124 of the bottom plate 114. The passage comprises a horizontal portion 120a within the bottom plate 114 extending longitudinally of the section and communicating with the bore 122, a horizontal portion 120b extending transversely in the plate 114 and communicating with the portion 120b, and a portion 120c extending upwardly in the bottom plate 114 and one of the side plates, and communicating with a valve (not shown) of the baffle mechanism. This valve also communicates with a vertical portion 125a of an exhaust passage 125 which extends in the side plate and the bottom plate 114. The portion 125a communicates with a horizontal portion 125b of the passage 125 extending transversely in the plate 114. The portion 125b communicates with a portion 125c of the passage 125 which extends longitudinally in the plate 114 (the portion 125c is formed by a bore plugged by a plug 126). The portion 125c communicates with a portion 125d which extends horizontally transversely in the plate 114. The portion 125d communicates with a portion 125e extending longitudinally in the plate 114. The portion 125e has an upwardly opening exit 125f formed in the bottom plate 114. The exit 125f is connected by a bridging piece (not shown) to an entrance 125g formed in the plate 114 and communicating with a passage portion 125h extending longitudinally in the plate 114 to a bore 128 which extends from an end face 129 of the plate 114 in which a connector (not shown) to exhaust is received. The baffle of the machine is moved by fluid supplied via the passage 120 and exhausted via the passage 125, the timing and direction of movement being determined by a valve (not shown) connecting the baffle mechanism to the passages 120 and 125.

A second of the passages 130 is arranged to supply fluid to a plunger operating mechanism. This passage leads from a connector (not shown) mounted in a bore 132 in the end face 124 and comprises a longitudinally-extending horizontal portion 130a within the plate 114 and an upwardly-opening exit 130b communicating with the portion 130a and connected to the plunger operating mechanism. A further passage 135 formed in the plate 114 provides an exhaust for fluid from the plunger operating mechanism. The passage comprises an entrance 135a formed in the plate 114 and connected to the plunger operating mechanism. The entrance 135a communicates with a bore 135b in the plate 114 which also communicates with a bore 138 in the end face 124 which is connected to exhaust.

A third 140 of the passages is arranged to supply fluid to a blank mould opening mechanism mounted on the underside of the top plate. This passage leads from a connector (not shown) mounted in a bore 142 extending from the end face 124. A portion 140a of the passage 140 extends longitudinally in the plate 114 and communicates with a portion 140b extending upwardly in the plate 114 and one of the side plates. A transversely extending portion of the passage 140 (not shown) in the top plate communicates with the portion 140b and with a valve of the blank mould opening mechanism. A further passage (not shown) extending transversely in the top plate and longitudinally in one of the side plates provides an exhaust passage for the blank mould opening mechanism.

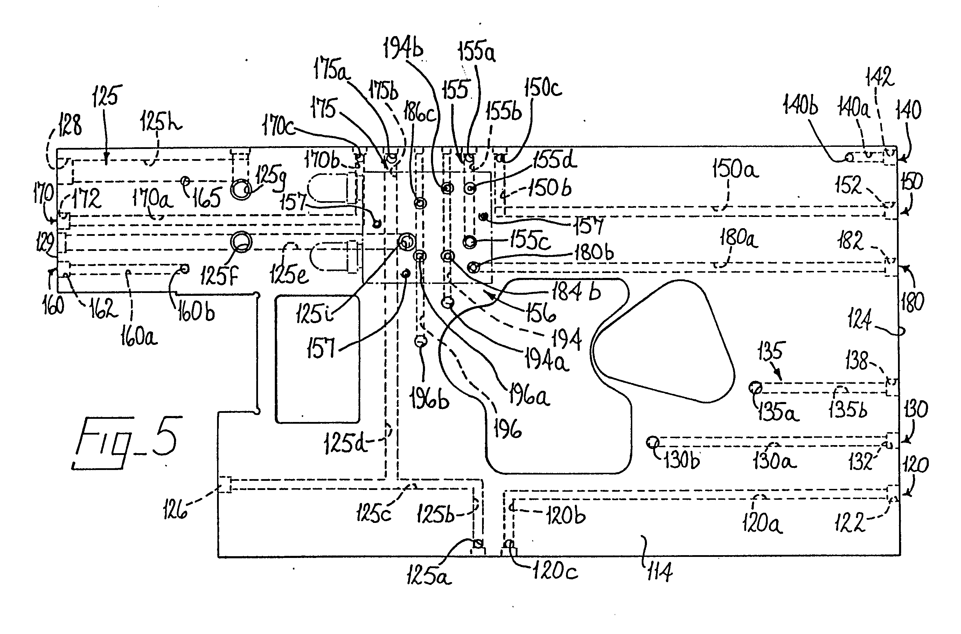

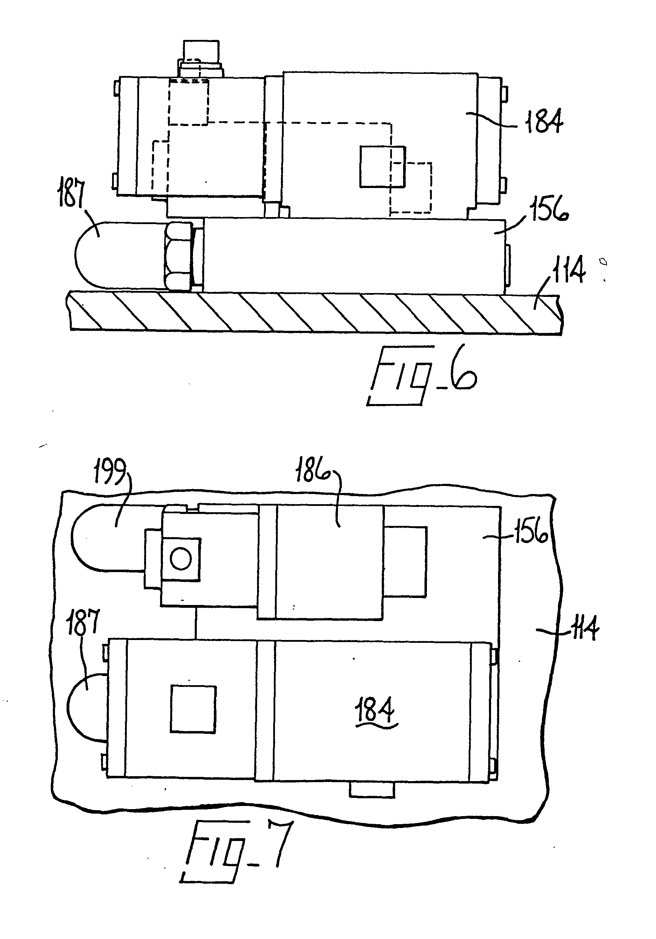

A fourth 150 of the passages supplies fluid to a funnel operating mechanism. This passage leads from a bore 152 extending from the face 124 and has a longitudinally extending portion 150a and a transversely extending portion 150b in the bottom plate 114, and a vertically extending portion 150c in the bottom plate 114 and one of the side plates. A further passage 155 provides an exhaust for the funnel operating mechanism. This passage has a vertically extending portion 155a in one of the side plates and the bottom plate 114 and a transversely extending portion 155b which has an upwardly opening exit 15c in the plate 114. A distribution block 156 (see Figures 6 to 8) whose position is indicated in Figure 5 contains a passage 159 which connects the exit 155c to an entrance 125i of the portion 125e of the exhaust passage 125.

A fifth 160 of the passages supplies fluid to a blowhead moving mechanism. This passage leads from a bore 162 extending from the face 129 and has a longitudinally extending portion 160a in the plate 114 with an upwardly opening exit 160b. An exhaust for the blowhead moving mechanism is connected to an entrance 165 to the portion 125h of the exhaust passage 125 formed in the plate 114.

A sixth 170 of the passages supplies fluid to a blow mould opening mechanism. This passage leads from a bore 172 extending from the face 129 and has a longitudinally extending portion 170a and a transversely extending portion 170b in the plate 114, a vertically extending portion 170c in the bottom plate 114 and one of the side plates, and a transversely extending portion (not shown) in the top plate. A passage 175 provides an exhaust for the blow mould opening mechanism. This passage has a portion (not shown) extending transversely in the top plate, a vertically extending portion 175a in one of the side plates and the bottom plate 114, and a transversely extending portion 175b in the bottom plate 114 which communicates with the portion 125e of the exhaust passage 125. The passage 175 also provides an exhaust for a take-out mechanism which is supplied by a passage which does not pass through the frame. It will be noted that the passage 125 serves as a common exhaust for a plurality of the mechanisms.

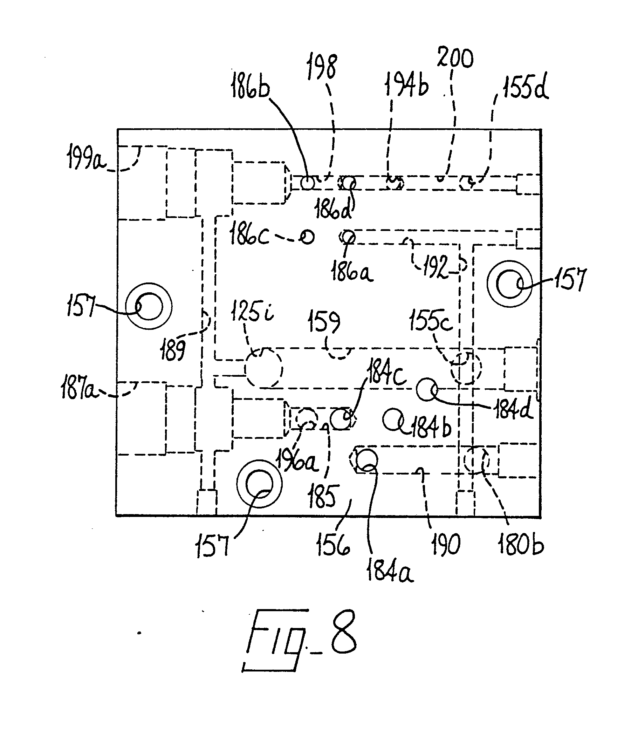

A seventh 180 of the passages supplies fluid to a parison transfer mechanism and communicates with passages in the distribution block 156 which is mounted on the bottom plate 114 by bolts passing through holes 157 in the block 156 and the plate 114. The passage 180 leads from a bore 182 extending from the face 124 and has a longitudinally extending portion 180a in the plate 114 with an upwardly-opening exit 180b beneath the block 114. The exit 180b is connected by passages in the block 156 to two valves 184 and 186 mounted on top of the block 156. A passage 190 connects the exit 180b to a port 184a of the valve 184 (see Figure 8) while a passage 192 connects the exit 180b to a port 186a of the valve 186.

The valve 184 is a servo-valve which controls the amount of fluid supplied to the parison transfer mechanism to determine its direction and speed of operation. The valve 184 connects the port 184a either to a port 184b or a port 184c thereof. The port 184b communicates through the block 156 with a passage 194 which extends transversely in the plate 114. The passage 194 has an exit 194a connected to the parison transfer mechanism so that, when the passage 194 receives fluid the mechanism moves towards the blank mould of the section. The port 184c communicates via a passage 185 in the block 156 with an entrance 196a of a passage 196 which extends transversely in the plate 114. The passage 196 has an exit 196b connected to the opposite side of the parison transfer mechanism to the exit 194a. The valve 184 also acts to connect the ports 184b or 184c to a port 184d thereof which communicates with the passage 159 to provide exhaust via the passage 125. The passage 185 is also connected to a shock absorber 187 mounted in a bore 187a in the block 156. A passage 189 connects the shock absorber 187 to the entrance 125i.

The valve 186 acts in a similar way to the valve 184 but is not a servo valve and is intended for use instead of the valve 184 in emergencies. The valve 186 acts to connect the port 186a to either a port 186b, which communicates with an entrance 194b of the passage 194 via a passage 198, or a port 186c which enters the passage 196. The passage 198 is also connected to a shock absorber 199 mounted in a bore 199a in the block 156. The passage 189 connects the shock absorber to the entrance 125i. The valve 186 also acts to connect the ports 186b or 186c to a port 186d. The port 186d is connected by a passage 200 to an entrance 155d of the passage 155 so that an exhaust via the passage 125 is provided.

## Claims

1. A glassware forming machine of the individual section type comprising a machine base (10), and a plurality of individual sections mounted side-by-side on the machine base, each section comprising a supporting frame (12) and forming mechanisms supported by the frame, the forming mechanisms being arranged to operate in a predetermined sequence to form a gob of molten glass supplied to the section into an article of glassware, the forming mechanisms being operated by the supply thereto of fluid under pressure, the supporting frame of each section comprising a bottom plate (14; 114) mounted on the machine base, side (16) and end plates (18) extending upwardly from the bottom plate and supported thereby, and a top plate (22) supported by the side and end plates, characterised in that each section frame has passages (42, 46; 120, 130, 140, 150, 160, 170, 180) formed therein through which fluid under pressure can be supplied to the forming mechanisms, the passages being formed within the material of at least one of the plates of the supporting frame.

2. A glassware forming machine according to claim 1, characterised in that each passage has a portion (42b, 46a; 120a, 130a, 140a, 150a, 160a, 170a, 180a) which extends in the bottom plate (14; 114) longitudinally of the section.

3. A glassware forming machine according to claim 2, characterised in that those passages (130, 160, 180) which supply fluid under pressure to forming mechanisms which are mounted on the bottom plate (114) each have an upwardly-opening exit (130b, 160b, 180b) formed in the bottom plate (114) for connection to the forming mechanism, the exit communicating with the portion of the passage (130a, 160a, 180a) which extends in the bottom plate.

4. A glassware forming machine according to any one of claims 1 to 3, characterised in that those passages (42, 46; 120, 140, 150, 170) which supply fluid under pressure to forming mechanisms which are mounted on the top plate (22) each have a portion (42d, 46c; 120c, 140b, 150c, 170c) which extends upwardly in one of the side or end plates.

5. A glassware forming machine according to claim 4, characterised in that at least some of the passages (42, 46) which supply fluid under pressure to forming mechanisms which are mounted on the top plate (22) also have a portion (42e, 46d) which extends in the top plate transversely of the section.

6. A glassware forming machine according to any one of claims 1 to 5, characterised in that at least one of the passages (180) communicates with passages in a distribution block (156) mounted on the bottom plate (114), the distribution block defining passages which lead to one or more valves which control the operation of one or more of the forming mechanisms.

7. A machine according to any one of claims 1 to 6, characterised in that the bottom plate (14, 114) comprises two plate portions, one of which directly overlies the other, and the passages formed within the bottom plate are provided by grooves formed in one or both of the surfaces of the plate portions which engage one another.

8. A machine according to any one of claims 1 to 7, characterised in that each section frame has further passages (125, 135, 155) formed therein through which fluid can be exhausted from the forming mechanisms, the further passages being formed within the material of at least one of the plates of the supporting frame.

9. A machine according to claim 8, characterised in that a plurality of the further passages communicate with a common exhaust passage (125) formed in the bottom plate.

10. A machine according to any one of claims 1 to 9, characterised in that the top plate (22) of each section frame is mounted for removal either in its entirety or in sections (22a, 22b, 22c) on the side (16) and end plates (18) thereof.

**Patentansprüche**

1. Glaswarenformmaschine vom IS-Typ mit einem Maschinenboden (10) und einer Vielzahl von einzelnen Abschnitten, die Seite an Seite an dem Maschinenboden angeordnet sind, wobei jeder Abschnitt einen Stützrahmen (12) und eine von dem Rahmen getragene Formmechanik umfaßt, die so angeordnet ist, daß sie in vorbestimmter Folge arbeitet, um ein dem Abschnitt zugeführtes Stück geschmolzenen Glases in einen Glasgegenstand zu formen, wobei jede Formmechanik durch Zuführung von Druckfluid betätigbar ist, der Stützrahmen eines jeden Abschnittes eine Bodenplatte (14; 114), die am Maschinenboden angeordnet ist, Seitenplatten (16) und Endplatten (18) umfaßt, die sich von der Bodenplatte aufwärts erstrecken und von ihr abgestützt sind, und wobei von den Seiten- und Endplatten eine obere Platte (22) getragen ist, dadurch gekennzeichnet, daß jeder Stützrahmen Durchgänge (42, 46; 120, 130, 140, 150, 160, 170, 180) aufweist, durch welche Druckfluid jeder Formmechanik zuführbar ist, und daß die Durchgänge innerhalb wenigstens einer der Platten des Stützrahmens ausgebildet sind.

2. Glaswarenformmaschine nach Anspruch 1, dadurch gekennzeichnet, daß jeder Durchgang einen Abschnitt (42b, 46a; 120a, 130a, 140a, 150a, 160a, 170a, 180a) aufweist, der sich in der Bodenplatte (14; 114) längs des Abschnittes erstreckt.

3. Glaswarenformmaschine nach Anspruch 2, dadurch gekennzeichnet, daß diejenigen Durchgänge (130, 160, 180), welche der an der Bodenplatte (114) angeordneten Formmechanik Druckfluid zuführen, je einen sich aufwärts öffnenden Ausgang (130b, 160b, 180b) aufweisen, welcher zwecks Verbindung mit der Formmechanik in der Bodenplatte (114) ausgebildet ist, und daß der Ausgang mit dem Abschnitt des Durchganges (130a, 160a, 180a) in Verbindung steht, der sich in der Bodenplatte erstreckt.

4. Glaswarenformmaschine nach einem der Ansprüche 1 bis 3, dadurch gekennzeichnet, daß diejenigen Durchgänge (42, 46; 120, 140, 150, 170), welche der an der oberen Platte (22) angeordneten Formmechanik Druckfluid zuführen, je einen Abschnitt (42d, 46c; 120c, 140b, 150c, 170c) aufweisen, der sich aufwärts in einer der Seiten oder Endplatten erstreckt.

5. Glaswarenformmaschine nach Anspruch 4, dadurch gekennzeichnet, daß wenigstens einige der Durchgänge (42, 46), welche der an der oberen Platte (22) angeordneten Formmechanik Druckfluid zuführen, ebenfalls einen Abschnitt (42e, 46d) aufweisen, der sich quer zum Abschnitt in der oberen Platte erstreckt.

6. Glaswarenformmaschine nach einem der Ansprüche 1 bis 5, dadurch gekennzeichnet, daß wenigstens einer der Durchgänge (180) mit Durchgängen in einem Verteilerblock (156) in Verbindung steht, welcher an der Bodenplatte (114) angeordnet ist, und daß der Verteilerblock Durchgänge definiert, die zu einem oder mehreren Ventilen führen, welche den Betrieb wenigstens einer Formmechanik steuern.

7. Glaswarenformmaschine nach einem der Ansprüche 1 bis 6, dadurch gekennzeichnet, daß die Bodenplatte (14, 114) zwei Plattenabschnitte umfaßt, von welchen einer direkt über dem anderen angeordnet ist, und daß die innerhalb der Bodenplatte ausgebildeten Durchgänge durch Ausnehmungen, geschaffen sind, welche in einer oder beiden Oberflächen der Plattenabschnitte vorgesehen sind, die miteinander in Eingriff stehen.

8. Glaswarenformmaschine nach einem der Ansprüche 1 bis 7, dadurch gekennzeichnet, daß jeder Rahmen weitere Durchgänge (125, 135, 155) aufweist, durch welche Fluid aus der Formmechanik abgelassen werden kann, und daß diese weiteren Durchgänge innerhalb wenigstens einer der Platten des Stützrahmens ausgebildet sind.

9. Glaswarenformmaschine nach Anspruch 8, dadurch gekennzeichnet, daß eine Vielzahl der weiteren Durchgänge mit einem gemeinsamen Auslaßdurchgang (125) verbunden ist, welcher in der Bodenplatte ausgebildet ist.

10. Glaswarenformmaschine nach einem der Ansprüche 1 bis 9, dadurch gekennzeichnet, daß die Bodenplatte (22) eines jeden Stützrahmens des Abschnittes entweder in ihrer Gesamtheit oder in Abschnitten (22a, 22b, 22c) an den Seitenplatten (16) und den Endplatten (18) entfernbar angeordnet ist.

## Revendications

1. Machine à mouler le verre du type à sections individuelles qui comprend un socle de machine et plusieurs sections individuelles montées côte-à-côte sur le socle, chaque section comprenant un bâti support et des mécanismes de moulage supportés par le bâti, les mécanismes de moulage étant agencés pour travailler en une séquence prédéterminée pour transformer une paraison de verre fondu acheminée à la section en un article de verre, les mécanismes de moulage étant actionnés par alimentation de ces mécanismes en fluide sous pression, le bâti support de chaque section comprenant une plaque de base (14; 114) montée sur le socle de la machine, des plaques latérales (16) et terminales (18) qui s'élèvent sur la plaque de base et sont supportées par celle-ci et une plaque supérieure (1) supportée par les plaques latérales et terminales, caractérisée en ce que, dans chaque bâti de section sont formés des passages (42, 46; 120, 130, 140, 150, 160, 170, 180) à travers lesquels du fluide sous pression peut être acheminé aux mécanismes de moulage, les passages étant formés dans la matière d'au moins une des plaques du bâti support.

2. Machine à mouler le verre selon la revendication 1, caractérisée en ce que chaque passage possède une portion (42b, 46a; 120a, 130a, 140a, 150a, 160a, 170a, 180a) qui s'étend dans la direction longitudinale de la section de la plaque de base (14; 114).

3. Machine à mouler le verre selon la revendication 2, caractérisée en ce que les passages (130, 160, 180) qui acheminent le fluide sous pression aux mécanismes de moulage qui sont montés sur la plaque de base (114) ont chacun une sortie (130b, 160b, 180b) débouchant vers le haut dans la plaque de base (114) pour se raccorder aux mécanismes de moulage, la sortie communiquant avec la portion du passage (130a, 160a, 180a) qui s'étend dans la plaque de base.

4. Machine à mouler le verre selon une quelconque des revendications 1 à 3, caractérisée en ce que les passages (42, 46; 120, 140, 150, 170) qui acheminent le fluide sous pression aux mécanismes de moulage qui sont montés sur la plaque supérieure (22) ont une portion (42d, 46c; 120c, 140b, 150c, 170c) qui s'étend vers le haut dans l'une des plaques latérales ou des plaques terminales.

5. Machine à mouler le verre selon la revendication 4, caractérisée en ce qu'au moins certains des passages (42, 46) qui acheminent le fluide sous pression aux mécanismes de moulage qui sont montés sur la plaque supérieure (22) comprennent aussi une portion (42e, 46d) qui s'étend dans la plaque supérieure dans la direction transversale de la section.

6. Machine à mouler le verre selon une quelconque des revendications 1 à 5, caractérisée en ce qu'au moins un des passages (180) communique avec des passages prévus dans un bloc de distribution (156) monté sur la plaque de base (114), le bloc de distribution définissant des passages qui mènent à une ou plusieurs vannes qui commandent le fonctionnement d'un ou plusieurs de mécanismes de moulage.

7. Machine selon une quelconque des revendications 1 à 6, caractérisée en ce que la plaque de base (14, 114) comprend deux parties de plaque, dont l'une recouvre directement l'autre, et les passages formés dans la plaque de base sont formés par des rainures ménagées dans l'une ou dans chacune des surfaces des parties de plaque qui sont en appui l'une sur l'autre.

8. Machine selon une quelconque des revendications 1 à 7, caractérisée en ce que, dans chaque bâti de section, sont formés d'autres passages (125, 135, 155) à travers lesquels le fluide peut s'échapper des mécanismes de moulage, ces autres passages étant formés dans la matière d'au moins une des plaques du bâti support.

9. Machine selon la revendication 8, caractérisée en ce que plusieurs des autres passages communiquent avec un passage d'échappement commun (125) formé dans la plaque de base.

10. Machine selon une quelconque des revendications 1 à 9, caractérisée en ce que la plaque supérieure (22), de chaque bâti de section est montée sur les plaques latérales (16) et terminales (18) de cette section, de façon à pouvoir être déposée, soit en totalité, soit par sections (22a, 22b, 22c).

Fig_1

Fig_2

22   42e   22b   Fig_3

48

12   16

42d

Fig_4

22a

56

12   18

54   40

52   44   14

40

50   10

Fig_5

EP 0 184 394 B1

Fig_6

Fig_7

Fig_8